# EUROPÄISCHE PATENTSCHRIFT

(11) **EP 3 068 611 B1**
(45) Veröffentlichungstag und Bekanntmachung des Hinweises auf die Patenterteilung: **17.10.2018**
(21) Anmeldenummer: 14776583.8
(22) Anmeldetag: 23.09.2014
(51) Int. Cl.: B29C 70/02, B29C 63/02, E03C 1/18

(54) **SANITÄRBECKENFORMTEIL**
SANITARY BASIN MOULDED PART
BAC SANITAIRE MOULÉ

(30) Priorität: 15.11.2013 DE 102013019536
(43) Veröffentlichungstag der Anmeldung: 21.09.2016
(73) Patentinhaber: Schock GmbH, 94209 Regen (DE)
(72) Erfinder: PATERNOSTER, Rudolf, 94269 Rinchnach (DE); PREUSS, Josef, 94227 Zwiesel (DE)
(74) Vertreter: Lindner Blaumeier Patent- und Rechtsanwälte
(86) Internationale Anmeldenummer: PCT/EP2014/002575
(87) Internationale Veröffentlichungsnummer: WO 2015/070940

(56) Entgegenhaltungen:
- EP-A2- 0 229 262
- DE-A- 2 823 017
- DE-T2- 69 031 130

## Beschreibung

Die Erfindung betrifft ein Sanitärbeckenformteil, wie beispielsweise eine Küchenspüle, ein Waschbecken oder eine Duschwanne, mit den Merkmalen im Oberbegriff von Anspruch 1.

Aus der DE 10 2004 055 365 A1 ist ein Beckenformteil mit den Merkmalen des Oberbegriffs des Patentanspruchs 1 bekannt. Aus der EP 0 361 101 B1 ist ein zugehöriges Herstellverfahren unter Verwendung eines beispielsweise für Küchenspülen geeigneten Formenteils bekannt. Derart hergestellte Beckenformteile weisen eine hohe optische Qualität auf sowie sehr gute Gebrauchseigenschaften, insbesondere eine hohe Abriebfestigkeit und eine hohe Langzeitstabilität des optischen Erscheinungsbildes.

Insbesondere großvolumige und/oder von einer Flächenform abweichende, dreidimensional sich erstreckende Beckenformteile, wie beispielsweise eine Küchenspüle, können eine Masse von beispielsweise mehr als 10 kg aufweisen, insbesondere, wenn sie aus einem ein polymerisiertes ausgehärtetes Bindemittel und darin eingelagerte Füllstoffe aufweisenden Kompositwerkstoff hergestellt sind, wie dies beispielsweise in der EP 0 361 101 B1 beschrieben ist. Dadurch müssen insbesondere beim Transport, aber auch bei der Montage der Beckenformteile Vorkehrungen für eine Bruchsicherung getroffen werden, was einen entsprechenden Aufwand erfordert und die Handhabung erschwert.

Hinzu kommt, dass die Oberfläche der hergestellten Sanitärbeckenformteile zwar von außerordentlich hoher Qualität ist, dass aber im Verlauf des jahrelangen oder jahrzehntelangen Gebrauchs die Sanitärbeckenformteile stark beansprucht werden, nicht nur mechanisch, beispielsweise durch Abrieb, Kratzen oder Stöße, sondern auch durch Heiß-/Kalt-Belastungen, beispielsweise durch heißes Spülwasser oder durch abgestelltes und noch heißes Kochgeschirr. Insbesondere bei aus einem Kompositwerkstoff hergestellten Sanitärbeckenformteilen muss dafür Sorge getragen werden, dass an der Oberfläche keine Spannungsrisse auftreten, was nur durch den Einsatz hochwertiger Harze und eine aufwendige Prozessführung beim Herstellvorgang gewährleistet werden kann.

Die DE 690 31 130 T2 beschreibt ein Sanitärbeckenformteil mit einem die Form des Sanitärbeckenformteils aufweisenden und die mechanische Stabilität des Sanitärbeckenformteils bereitstellenden Grundkörper, wobei auf der Sichtseite des Sanitärbeckenformteils zumindest an einem Flächenbereich über dem Grundkörper eine Decklage angeordnet ist, die eine Deckschicht und ein mit einem ausgehärteten Bindemittel getränktes Fasergewebe aufweist, wobei das Fasergewebe aus Kohlenstofffasern besteht.

Der Erfindung liegt daher die Aufgabe zugrunde, ein Sanitärbeckenformteil bereitzustellen, durch welches die Gebrauchseigenschaften der Sanitärbeckenformteils weiter verbessert wird und das eine besonders ansprechende Oberflächenerscheinung bereitstellt.

Die Aufgabe ist durch das im Anspruch 1 bestimmte Sanitärbeckenformteil gelöst. Weitere Ausführungsarten der Erfindung sind in den Unteransprüchen bestimmt.

Gemäß dem Kennzeichen von Anspruch 1 ist vorgesehen, dass Rovings zu dem Fasergewebe verwoben sind, dass die Kett- und Schussfaserrovings einen Winkel von im Wesentlichen 90° einschließen und dass die Deckschicht und das Bindemittel derart durchscheinend sind, dass auf der Oberfläche der Decklage der Verlauf des Fasergewebes sichtbar ist.

In einer Ausführungsart betrifft die Erfindung ein Sanitärbeckenformteil wie beispielsweise eine Küchenspüle, ein Waschbecken oder eine Duschwanne, mit einem die Form des Sanitärbeckenformteils aufweisenden und die mechanische Stabilität des Sanitärbeckenformteils bereitstellenden Grundkörper, wobei auf der Sichtseite, die im Anwendungsfall die Gebrauchsoberfläche des Sanitärbeckenformteils bildet, zumindest an einem Flächenbereich über dem Grundkörper eine Decklage angeordnet ist, die ein mit einem ausgehärteten Bindemittel getränktes Fasergewebe aufweist.

Der Grundkörper kann beispielsweise aus einem ein polymerisiertes ausgehärtetes Bindemittel und darin eingelagerte Füllstoffe aufweisenden Kompositwerkstoff hergestellt sein, wie dies in der EP 0 361 101 B1 oder der DE 10 2004 055 365 A1 beschrieben ist. Insbesondere kann bereits der Grundkörper ein Beckenformteil sein, der auch ohne die erfindungsgemäße Decklage ein verkaufsfähiges Produkt darstellt. Alternativ hierzu kann der Grundkörper gegenüber einem verkaufsfähigen Beckenformteil auch eine etwas geringere Dicke aufweisen und/oder eine geringere Oberflächenqualität auf der Sichtseite, die bei dem erfindungsgemäßen Sanitärbeckenformteil durch die zusätzlich aufzubringende Decklage gebildet wird.

Der Kompositwerkstoff des Grundkörpers kann beispielsweise aus einem ausgehärteten Harz, insbesondere einem Acrylharz, mit darin eingelagerten, vorzugsweise partikelförmigen anorganischen Füllstoffen, beispielsweise Sand oder Quarz, gebildet sein. Der Anteil des Füllstoffes beträgt vorzugsweise zwischen 55 und 85 Gew.-%, insbesondere zwischen 60 und 80 Gew.-% und vorzugsweise zwischen 65 und 75 Gew.-%, jeweils bezogen auf die Gesamtmasse des Grundkörpers. Die Größe der Füllstoffpartikel kann beispielsweise wie in der EP 0 361 101 B1 oder der DE 10 2004 055 365 A1 beschrieben gewählt werden.

In einer Ausführungsart ist die Decklage auf der Sichtseite des Sanitärbeckenformteils ganzflächig über dem Grundkörper angeordnet. Die Decklage kann außerdem auch noch seitlich auf den Rändern des Sanitärbeckenformteils aufgebracht sein, so dass nach einem Einbau des Sanitärbeckenformteils die gesamte sichtbare Oberfläche des Sanitärbeckenformteils durch die Decklage gebildet ist.

In einer Ausführungsart weist die Decklage eine Dicke auf, die weniger als 35 %, insbesondere weniger als 30 % und vorzugsweise weniger als 25 % der Dicke des Grundkörpers beträgt. Beispielsweise kann der Grundkörper eine Dicke von 10 mm aufweisen, wohingegen die Decklage eine Dicke von lediglich 1,5 mm aufweist. Trotz der relativ geringen prozentualen Dicke der Decklage ist durch die darin angeordneten Fasern, die insbesondere gewebeartig und vorzugsweise rechtwinklig zueinander verlaufen, eine Stabilisierung der über dem Fasergewebe angeordneten, und beispielsweise aus einem Harz bestehenden Deckschicht der Decklage gewährleistet, insbesondere gegenüber Spannungsrissen aufgrund von Heiß-/Kaltbelastungen. Die Deckschicht kann beispielsweise aus einem vorzugsweise hochtransparenten, alternativ auch eingefärbten Polyesterharz gebildet sein, oder alternativ aus einem Epoxydharz vorzugsweise mit einer wasserabweisenden Schicht an der Oberfläche.

Durch das in der Decklage angeordnete Fasergewebe wird die in Richtung auf die Oberfläche des Sanitärbeckenformteils über dem Fasergewebe angeordnete Deckschicht stabilisiert, und damit eine hohe Stabilität der durch die Decklage gebildeten Oberfläche des Sanitärbeckenformteils erreicht, insbesondere gegenüber Spannungsrissen aufgrund einer Heiß/Kalt-Belastung. In einer Ausführungsart herrschen in der Decklage, insbesondere in der Deckschicht, bei Raumtemperatur Druckspannungen, durch welche das Auftreten von Spannungsrissen zuverlässig verhindert ist.

Während die Steifigkeit des Sanitärbeckenformteils bereits durch den Grundkörper bereitgestellt wird, erlaubt die Decklage eine zusätzliche Stabilisierung der Oberfläche und auch eine Erhöhung der Schlagzähigkeit beim Auftreten von Stößen, beispielsweise durch herunterfallende Küchenutensilien. Hinzu kommt, dass durch die Anordnung einer Decklage auf dem Grundkörper zusätzliche Möglichkeiten der Gestaltung der optischen Erscheinungsform des Sanitärbeckenformteils gegeben sind, wobei durch die Verwendung eines mit einem ausgehärteten Bindemittel getränkten Fasergewebes die erzeugte Optik auch dauerhaft sehr hohen ästhetischen Ansprüchen genügt.

In einer Ausführungsart ist das Fasergewebe innerhalb der Decklage in Bezug auf die Dicke der Decklage außermittig und beispielsweise in Richtung auf den Grundkörper versetzt angeordnet. So kann das Fasergewebe an oder nahe einer dem Grundkörper zugewandten Oberfläche der Decklage angeordnet sein. Zwischen dem Fasergewebe und der Oberfläche des Grundkörpers kann noch eine vergleichsweise dünne Schicht des ausgehärteten Bindemittels, mit dem das Fasergewebe getränkt ist, angeordnet sein, beispielsweise mit einer Dicke von weniger als 0,3 mm, insbesondere weniger als 0,2 mm und vorzugsweise weniger als 0,1 mm. Durch einen solchen Sandwichaufbau wird eine weitere Verbesserung der Beständigkeit der Oberfläche des Sanitärbeckenformteils gegenüber Heiß-/Kaltbelastungen erreicht. Alternativ hierzu kann das Fasergewebe auch aus der Mitte der Decklage versetzt in Richtung auf die Oberfläche des Sanitärbeckenformteils angeordnet sein.

In einer Ausführungsart beträgt die Dicke des Fasergewebes weniger als 20 %, insbesondere weniger als 15 % und vorzugsweise weniger als 10 % der Dicke des Grundkörpers. Die Dicke des Fasergewebes kann weniger als 60 %, insbesondere weniger als 50 % und vorzugsweise weniger als 40 % der Dicke der Decklage betragen. In einer Ausführungsart beträgt die Dicke des Fasergewebes beispielsweise zwischen 0,3 und 0,7 mm, wohingegen die gesamte Dicke der Decklage mehr als 1 mm und weniger als 2 mm beträgt. Die Dicke des Grundkörpers kann mehr als 7 mm und weniger als 14 mm betragen, insbesondere mehr als 8 mm und weniger als 12 mm. Die vergleichsweise geringe Dicke des Fasergewebes ist ausreichend, um die im Falle einer Heiß-/Kaltbelastung insbesondere lateral in Bezug auf die Oberfläche auftretenden Spannungen zu gewährleisten.

In einer Ausführungsart weist die Decklage auf der Sichtseite des Sanitärbeckenformteils eine wasserabweisende Schicht auf, beispielsweise eine dünne Decklage aus einem Polyesterharz. Dadurch ist gewährleistet, dass dauerhaft ein Eindringen von Wasser in die Decklage verhindert ist.

Die Glasübergangstemperatur und vorzugsweise auch die Martens-Temperatur der Decklage kann im Hinblick auf den darunterliegenden Grundkörper vergleichsweise gering sein, beispielsweise lediglich höher als 80 °C.

In einer Ausführungsart weist das Fasergewebe der Decklage Kohlenstofffasern auf, insbesondere besteht das Fasergewebe aus Kohlenstofffasern. Dabei können Faserbündel oder so genannte Rovings zu einem Fasergewebe verwoben sein, wobei die Kett- und Schussfaserrovings einen Winkel von im Wesentlichen 90° einschließen. Für Sanitärformteile hat sich als Webart ein Köper-Gewebe als besonders vorteilhaft erwiesen. Vorzugsweise verlaufen die Kett- und Schussfadenrovings parallel bzw. quer zur Längsrichtung des Sanitärbeckenformteils. Untersuchungen haben ergeben, dass insbesondere bei einem solchen Fasergewebe die Widerstandsfähigkeit gegenüber Spannungsrissen besonders hoch ist.

In einer Ausführungsart beträgt das Flächengewicht des Fasergewebes mehr als 50 g/m² und weniger als 400 g/m², insbesondere mehr als 80 g/m² und weniger als 350 g/m² und vorzugsweise mehr als 100 g/m² und weniger als 300 g/m². Die Rovings weisen vorzugsweise eine Breite von mehr als 0,5 mm und weniger als 5 mm auf, insbesondere mehr als 0,7 mm und weniger als 3,5 mm und vorzugsweise mehr als 1,0 mm und weniger als 2,0 mm. In einer Ausführungsart ist das Fasergewebe ein Spread-Tow-Gewebe, entweder in der Webart Köper oder in der Webart Leinwand. Die Breite des Faserstrangs in Kette und/oder Schuss beträgt in diesem Fall mehr als 5 mm und weniger als 15 mm, insbesondere mehr als 6 mm und weniger als 12 mm.

Ein Verfahren zum Herstellen eines Sanitärbeckenformteils, wie beispielsweise eine Küchenspüle, ein Waschbecken oder eine Duschwanne, lehrt, einen die Form des Sanitärbeckenformteils aufweisenden und die mechanische Stabilität des Sanitärbeckenformteils Grundkörper bereitzustellen, wobei auf der Sichtseite des Sanitärbeckenformteils über dem Grundkörper eine Decklage angeordnet ist, und die Decklage ein mit einem ausgehärteten Bindemittel getränktes Fasergewebe aufweist.

Der Grundkörper kann aus einem ein polymerisiertes Bindemittel und darin eingelagerte Füllstoffe aufweisenden Kompositwerkstoff wie vorstehend beschrieben hergestellt sein. In einer Ausführungsart werden der Grundkörper und die Decklage separat hergestellt. Die in Form einer Abdeckschale vorliegende Decklage kann anschließend fest und unlösbar mit dem Grundkörper verbunden werden, indem die Decklage auf die der Sichtseite des Sanitärbeckenformteils entsprechende Oberfläche des Grundkörpers aufgebracht wird und mit dem Grundkörper verbunden wird. Beispielsweise kann die Verbindung durch ein Epoxidklebstoff, insbesondere einen Zweikomponenten-Epoxidklebstoff, hergestellt werden.

Entweder bereits beim Herstellen der Decklage oder beim Aufbringen der Decklage auf den Grundkörper kann die Decklage unter Druckspannung gesetzt werden. Dies kann beispielsweise dadurch erfolgen, dass entweder beim Herstellen der Decklage oder beim Verbinden der Decklage mit dem Grundkörper eine gegenüber der Raumtemperatur erhöhte Temperatur angewendet wird, so dass beim anschließenden Abkühlen aufgrund unterschiedlicher thermischer Ausdehnungskoeffizienten der Decklage einerseits und des Grundkörpers andererseits die Decklage unter Druckspannung gerät.

Dies gilt insbesondere bei der Verwendung von Kohlenstofffasern für die Decklage, da Kohlenstofffasern jedenfalls bereichsweise einen negativen thermischen Ausdehnungskoeffizienten aufweisen, so dass sich die Kohlenstofffasern beim Abkühlen verlängern, wohingegen das Bindemittel, mit dem die Kohlenstofffasern getränkt sind, beim Abkühlen schrumpfen möchten. Entsprechendes gilt für den Grundkörper, der ebenfalls beim Abkühlen schrumpft, so dass insbesondere bei Verwendung von Kohlenstofffasern für das Fasergewebe beim Herstellvorgang des Sanitärbeckenformteils Druckspannungen in die Decklage, insbesondere in die oberhalb des Fasergewebes liegende Harzschicht eingebracht werden, die im anschließenden Gebrauchsfall das Auftreten von Spannungsrissen zuverlässig verhindern.

In einer Ausführungsart wird der Grundkörper durch Abformen eines Formenteils hergestellt, insbesondere durch Gießformen. Dadurch lassen sich insbesondere aus einem Kompositwerkstoff hergestellte Grundkörper mit hoher Materialhomogenität und damit mit guten mechanischen Eigenschaften herstellen.

In einer Ausführungsart kann das Fasergewebe auf dem die Sichtseite des Sanitärbeckenformteils bildenden Teil des Formenteils eingelegt werden, wobei die Decklage auch bereits als sogenanntes Prepreg in der Art eines Halbzeuges in das Formenteil eingelegt werden kann. Alternativ hierzu kann das mit dem Bindemittel getränkte Fasergewebe als Prepreg vorliegen und mit dem bereits fertig hergestellten Grundkörper in einem Formenteil verbunden werden, indem das Formenteil beheizt wird, bis das Prepreg ausgehärtet und gegebenenfalls auch bereits mit dem Grundkörper verbunden ist. Für die Aushärtung des Prepregs kann dabei ein Formenteil verwendet werden, das formgleich zu dem Formenteil ist, mittels dem der Grundkörper hergestellt wird.

Weitere Vorteile, Merkmale und Einzelheiten der Erfindung ergeben sich aus den Unteransprüchen und der nachfolgenden Beschreibung, in der unter Bezugnahme auf die Zeichnungen ein Ausführungsbeispiel im Einzelnen beschrieben ist. Dabei können die in den Ansprüchen und in der Beschreibung erwähnten Merkmale jeweils einzeln für sich oder in beliebiger Kombination erfindungswesentlich sein.
- Fig. 1: zeigt einen Schnitt durch ein Ausführungsbeispiel eines erfindungsgemäßen Sanitärbeckenformteils in Richtung seiner Längsachse;
- Fig. 2: zeigt eine vergrößerte Darstellung eines Ausschnitts des Sanitärbeckenformteils der Fig. 1 im Bereich der Abtropffläche; und
- Fig. 3: zeigt eine Draufsicht auf die Oberfläche des Sanitärbeckenformteils.

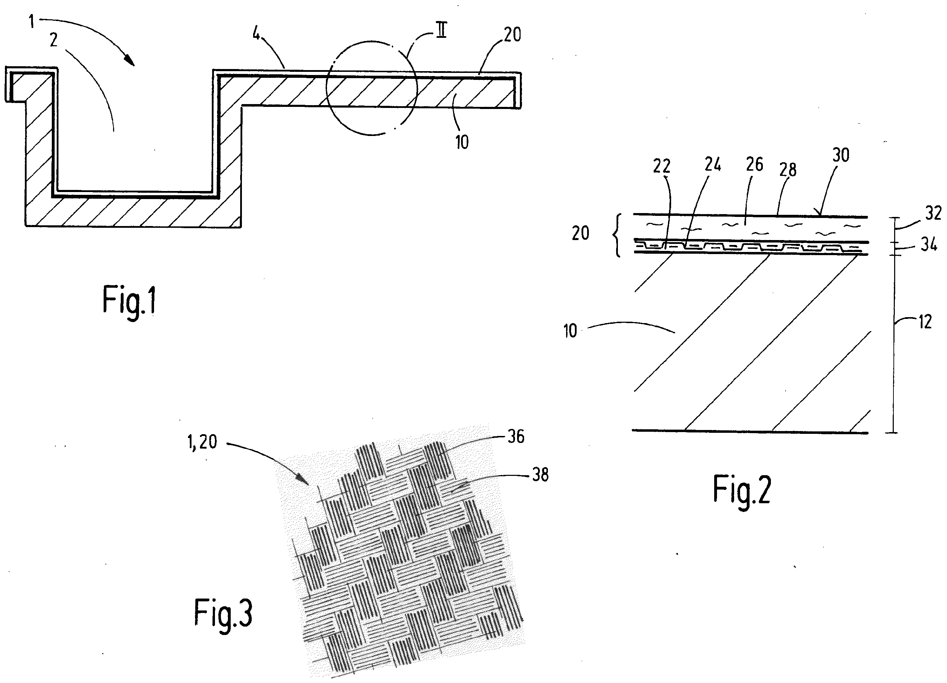

Die Fig. 1 zeigt einen Schnitt durch ein Ausführungsbeispiel eines erfindungsgemäßen Sanitärbeckenformteils 1 in Richtung seiner Längsachse. Im Ausführungsbeispiel handelt es sich um eine Kücheneinbauspüle mit einem Becken 2 und einer Abtropffläche 4. Die Fig. 2 zeigt eine vergrößerte Darstellung eines Ausschnitts des Sanitärbeckenformteils 1 im Bereich der Abtropffläche 4.

Das Sanitärbeckenformteil 1 weist einen die Form des Sanitärbeckenformteils 1 vollständig aufweisenden und die mechanische Stabilität bereitstellenden Grundkörper 10 auf, der im Ausführungsbeispiel aus einem Kompositwerkstoff hergestellt ist. Der Kompositwerkstoff ist aus einem ausgehärteten Acrylharz mit darin eingelagerten partikelförmigen Füllstoffen aus SiO₂ gebildet. Der Anteil des SiO₂-Füllstoffes beträgt mehr als 65 und weniger als 75 Gew.-%, bezogen auf die Gesamtmasse des Grundkörpers, die im Ausführungsbeispiel 8 kg beträgt. Die Dicke 12 des Grundkörpers 10 beträgt dabei 10 mm.

Auf der die Sichtseite des Sanitärbeckenformteils 1 bildenden Oberfläche 30 ist über dem Grundkörper 10 eine Decklage 20 angeordnet, die ein mit einem ausgehärteten Bindemittel 22 getränktes Fasergewebe 24 aufweist. Das Fasergewebe 24 ist dabei an oder nahe der dem Grundkörper 10 zugewandten Oberfläche der Decklage 20 angeordnet, wobei zwischen dem Fasergewebe 24 und dem Grundkörper 10 eine dünne Schicht des Bindemittels 22 verläuft, so dass die Decklage 20 auch auf ihrer dem Grundkörper 10 zugewandten Oberfläche eine durch das Bindemittel 22 geschlossene Oberfläche aufweist. Damit ist sichergestellt, dass eine von dem Fasergewebe 24 ausgehende stabilisierende Wirkung vollständig über das Bindemittel 22 in die Decklage 20 eingeleitet wird. Das Fasergewebe 24 ist aus Kohlenstofffasern gebildet. Die Webart ist Köper. Das Flächengewicht beträgt im Ausführungsbeispiel mehr als 100 g/m² und weniger als 250 g/m². Das Bindemittel ist ein Epoxydharz. Die Martens-Temperatur ist höher als 80 °C.

Oberhalb des Fasergewebes 24 weist die Decklage 20 in Richtung auf die Oberfläche 30 des Sanitärbeckenformteils 1 eine Deckschicht 26 auf, die ebenfalls aus einem ausgehärteten polymerisierten Harz bestehen kann, beispielsweise aus einem Epoxidharz oder einem Polyesterharz. An der Oberfläche weist die Decklage 20 eine wasserabweisende Schicht 28 auf, welche die Oberfläche 30 der Decklage 20 und damit auch des Sanitärbeckenformteils 1 bildet. Bei Verwendung von geeigneten Harzen für die Deckschicht 26, beispielsweise Polyesterharz, kann die wasserabweisende Schicht 28 auch entfallen. In einer Ausführungsart weist die Decklage 20 ein mit Epoxydharz getränktes Fasergewebe 24 und eine Deckschicht 26 aus Polyesterharz auf.

Die Dicke der Decklage 20 beträgt im Ausführungsbeispiel etwa 1,5 mm, wobei der Anteil 32 der Deckschicht 26 an der Dicke der Decklage 20 etwa 1 mm beträgt und der Anteil 34 des mit dem Bindemittel getränkten Fasergewebes 24 an der Dicke der Decklage 20 etwa 0,5 mm beträgt.

Die Fig. 3 zeigt eine Draufsicht auf die Oberfläche 30 des Sanitärbeckenformteils 1. In einem Ausführungsbeispiel ist die Deckschicht 26 und vorzugsweise auch das Bindemittel 22, mit dem das Fasergewebe 24 getränkt ist, transparent oder jedenfalls durchscheinend, so dass auf der Oberfläche 30 der Verlauf des Fasergewebes 24 sichtbar ist. Insbesondere bei der Verwendung von Kohlenstofffasern für das Fasergewebe 24 kommt es zu ästhetisch hochwertigen Lichtreflexen und einem 3D-Effekt aufgrund des nicht planen Verlaufes der Kettfadenrovings 36 und der Schussfadenrovings 38 innerhalb des Fasergewebes 24, insbesondere bei Anwendung der Webart Köper für das Fasergewebe 24. Verstärkt wird dies noch durch die Dicke 32 der Deckschicht 26 und ihres Brechungsindexes.

Auch durch die in Bezug auf die Dicke der Decklage 20 unsymmetrische Anordnung des Fasergewebes 24 kommt es insbesondere an der Oberfläche 30 zum Auftreten von Druckspannungen, welche der Entstehung von Spannungsrissen wirksam entgegenwirken.

## Patentansprüche

1. Sanitärbeckenformteil (1), wie beispielsweise eine Küchenspüle, ein Waschbecken oder eine Duschwanne, mit einem die Form des Sanitärbeckenformteils (1) aufweisenden und die mechanische Stabilität des Sanitärbeckenformteils (1) bereitstellenden Grundkörper (10), wobei auf der Sichtseite des Sanitärbeckenformteils (1) zumindest an einem Flächenbereich über dem Grundkörper (10) eine Decklage (20) angeordnet ist, die eine Deckschicht (26) und ein mit einem ausgehärteten Bindemittel (22) getränktes Fasergewebe (24) aufweist, wobei das Fasergewebe (24) aus Kohlenstofffasern besteht, **dadurch gekennzeichnet, dass** Rovings zu dem Fasergewebe verwoben sind, dass die Kett- und Schussfaserrovings einen Winkel von im Wesentlichen 90° einschließen und dass die Deckschicht (26) und das Bindemittel (22) derart durchscheinend sind, dass auf der Oberfläche (30) der Decklage (20) der Verlauf des Fasergewebes (24) sichtbar ist.

2. Sanitärbeckenformteil (1) nach Anspruch 1, **dadurch gekennzeichnet, dass** der Grundkörper (10) aus einem ein polymerisiertes ausgehärtetes Bindemittel und darin eingelagerte Füllstoffe aufweisenden Kompositwerkstoff hergestellt ist.

3. Sanitärbeckenformteil (1) nach einem der vorgenannten Ansprüche, **dadurch gekennzeichnet, dass** die Decklage (20) auf der Sichtseite des Sanitärbeckenformteils (1) ganzflächig über dem Grundkörper (10) angeordnet ist.

4. Sanitärbeckenformteil (1) nach einem der vorgenannten Ansprüche, **dadurch gekennzeichnet, dass** die Decklage (20) eine Dicke aufweist, die weniger als 35 %, insbesondere weniger als 30 % und vorzugsweise weniger als 25 % der Dicke (12) des Grundkörpers (10) beträgt.

5. Sanitärbeckenformteil (1) nach einem der vorgenannten Ansprüche, **dadurch gekennzeichnet, dass** das Fasergewebe (24) innerhalb der Decklage (20) in Bezug auf die Dicke der Decklage (20) außermittig versetzt angeordnet ist.

6. Sanitärbeckenformteil (1) nach einem der vorgenannten Ansprüche, **dadurch gekennzeichnet, dass** die Dicke (34) des Fasergewebes (24) weniger als 20 %, insbesondere weniger als 15 % und vorzugsweise weniger als 10 % der Dicke (12) des Grundkörpers (10) beträgt.

7. Sanitärbeckenformteil (1) nach einem der vorgenannten Ansprüche, **dadurch gekennzeichnet, dass** die Decklage (20) auf der Sichtseite des Sanitärbeckenformteils (1) eine wasserabweisende Schicht (28) aufweist.

## Claims

1. Sanitary basin moulded part (1), such as for example a kitchen sink, a wash basin or a shower tray, with a main body (10) in the shape of the sanitary basin moulded part (1) and providing the mechanical stability of the sanitary basin moulded part (1), wherein a covering layer (20) comprising a top layer (26) and a fibre fabric (24) impregnated with a cured binding agent (22) is arranged over the main body (10) in at least one surface area on the visible side of the sanitary basin moulded part (1), wherein the fibre fabric (24) consists of carbon fibres, **characterized in that** rovings are woven together to form the fibre fabric, **in that** the warp and weft fibre rovings form an angle of substantially 90° and **in that** the top layer (26) and the binding agent (22) are translucent in such a way that the pattern of the fibre fabric (24) is visible on the surface (30) of the covering layer (20).

2. Sanitary basin moulded part (1) according to Claim 1, **characterized in that** the main body (10) is produced from a composite material comprising a polymerized cured binding agent and fillers incorporated therein.

3. Sanitary basin moulded part (1) according to one of the preceding claims, **characterized in that** the covering layer (20) is arranged over the entire surface of the main body (10) on the visible side of the sanitary basin moulded part (1).

4. Sanitary basin moulded part (1) according to one of the preceding claims, **characterized in that** the covering layer (22) has a thickness which is less than 35%, in particular less than 30% and preferably less than 25%, of the thickness (12) of the main body (10).

5. Sanitary basin moulded part of (1) according to one of the preceding claims, **characterized in that** the fibre fabric (24) is arranged offset within the covering layer (20), off-centre with respect to the thickness of the covering layer (20).

6. Sanitary basin moulded part (1) according to one of the preceding claims, **characterized in that** the thickness (34) of the fibre fabric (24) is less than 20%, in particular less than 15% and preferably less than 10%, of the thickness (12) of the main body (10).

7. Sanitary basin moulded part (1) according to one of the preceding claims, **characterized in that** the covering layer (20) has a water-repellent layer (28) on the visible side of the sanitary basin moulded part (1).

## Revendications

1. Bac sanitaire moulé (1), comme par exemple un évier de cuisine, un lavabo ou une cuvette de douche, avec un corps de base (10) présentant la forme du bac sanitaire moulé (1) et assurant la stabilité mécanique du bac sanitaire moulé (1), dans lequel au moins une couche de recouvrement (20) est disposée sur le côté visible du bac sanitaire moulé (1) au moins sur une région de la surface au-dessus du corps de base (10), et présente une couche de couverture (26) et un tissu de fibres (24) imprégné d'un liant durci (22), dans lequel le tissu de fibres (24) se compose de fibres de carbone, **caractérisé en ce que** des mèches sont tissées sur le tissu de fibres, **en ce que** les mèches de fibres de chaîne et de trame forment un angle essentiellement de 90° et **en ce que** la couche de couverture (26) et le liant (22) sont translucides, de telle manière que le dessin du tissu de fibres (24) soit visible sur la surface (30) de la couche de recouvrement (20).

2. Bac sanitaire moulé (1) selon la revendication 1, **caractérisé en ce que** le corps de base (10) est fabriqué en un matériau composite présentant un liant durci polymérisé et des matières de charge incorporées dans celui-ci.

3. Bac sanitaire moulé (1) selon l'une quelconque des revendications précédentes, **caractérisé en ce que** la couche de recouvrement (20) est déposée sur le côté visible du bac sanitaire moulé (1) sur toute la surface du corps de base (10).

4. Bac sanitaire moulé (1) selon l'une quelconque des revendications précédentes, **caractérisé en ce que** la couche de recouvrement (20) présente une épaisseur, qui est inférieure à 35 %, en particulier inférieure à 30 %, et de préférence inférieure à 25 % de l'épaisseur (12) du corps de base (10).

5. Bac sanitaire moulé (1) selon l'une quelconque des revendications précédentes, **caractérisé en ce que** le tissu de fibres (24) est disposé à l'intérieur de la couche de recouvrement (20), en position décentrée par rapport à l'épaisseur de la couche de recouvrement (20).

6. Bac sanitaire moulé (1) selon l'une quelconque des revendications précédentes, **caractérisé en ce que** l'épaisseur (34) du tissu de fibres (24) est inférieure à 20 %, en particulier inférieure à 15 %, et de préférence inférieure à 10 % de l'épaisseur (12) du corps de base (10).

7. Bac sanitaire moulé (1) selon l'une quelconque des revendications précédentes, **caractérisé en ce que** la couche de recouvrement (20) présente une couche repoussant l'eau (28) sur le côté visible du bac sanitaire moulé (1).
